# EUROPÄISCHE PATENTSCHRIFT

(11) **EP 4 408 627 B1**
(45) Veröffentlichungstag und Bekanntmachung des Hinweises auf die Patenterteilung: **17.09.2025**
(21) Anmeldenummer: 22801692.9
(22) Anmeldetag: 29.09.2022
(51) Int. Cl.: B25J 15/02, B25J 19/00, B25J 13/08

(54) **SELBSTHALTENDE GREIFVORRICHTUNG**
SELF-RETAINING GRIPPING DEVICE
DISPOSITIF DE PRÉHENSION NON-DISSOCIABLE

(30) Priorität: 30.09.2021 DE 102021004914
(43) Veröffentlichungstag der Anmeldung: 07.08.2024
(73) Patentinhaber: Zimmer, Martin, 77866 Rheinau (DE); Zimmer, Günther, 77866 Rheinau (DE)
(72) Erfinder: Zimmer, Martin, 77866 Rheinau (DE); Zimmer, Günther, 77866 Rheinau (DE)
(74) Vertreter: Thämer, Wolfgang
(86) Internationale Anmeldenummer: PCT/DE2022/000100
(87) Internationale Veröffentlichungsnummer: WO 2023/051854

(56) Entgegenhaltungen:
- EP-A1- 3 260 248
- EP-A1- 3 360 654
- DE-A1- 3 606 874
- DE-A1- 3 910 801

## Beschreibung

Die Erfindung betrifft eine Greifvorrichtung mit einem, eine Motorstromüberwachung oder eine Drucküberwachung aufweisenden Antriebsmotor und mit einem mittels des Antriebsmotors antreibbaren Getriebe, wobei das Getriebe eine mittels mindestens einer rotierbaren Getriebewelle getriebene Schraubgetriebestufe hat, die mit mindestens einer von zumindest zwei relativ zueinander verfahrbaren Greifelementträgern gekuppelt ist sowie ein Verfahren zum Betrieb einer derartigen Greifvorrichtung mit mindestens jeweils einem Greifelement pro Greiferschlitten und mit einem Greifgut.

Aus der DE 10 2015 012 779 A1 ist eine derartige Greifvorrichtung bekannt. Weitere Greifvorrichtungen des Stands der Technik sind außerdem aus der EP 3 260 248 A1, der EP 3 360 654 A1 sowie der DE 36 06 874 A1 bekannt.

Der vorliegenden Erfindung liegt die Problemstellung zugrunde, trotz hoher Greifkraft der Greifvorrichtung den Antriebsmotor zu entlasten.

Diese Problemstellung wird mit den Merkmalen des Hauptanspruches gelöst. Dazu ist in einem Gehäuse der Greifvorrichtung eine Feststellbremse zum Blockieren zumindest einer der genannten Getriebewellen angeordnet. Die Schraubgetriebestufe weist eine gegen mindestens einen Federenergiespeicher axial verschiebbare Schnecke auf, sodass bei einer Zunahme des Flankendrucks an der jeweiligen Greifdruckflanke der Schnecke die Belastung eines dieser Federenergiespeicher zunimmt.

Beim Betrieb der Greifvorrichtung werden mittels der Greifvorrichtung bei gelüfteter Feststellbremse die Greifelemente an das Greifgut angepresst, bis die Motorstromüberwachung oder die Drucküberwachung einen vorgegebenen Wert erreicht. Der Flankendruck der Greifdruckflanke der Schnecke steigt an und die Schnecke wird unter Belastung des Federenergiespeichers in axialer Richtung verschoben. Die Feststellbremse wird geschlossen und der Antriebsmotor wird abgeschaltet.

In der vorliegenden Erfindung wird zur Sicherstellung der Greifkraft die Schnecke der Schraubgetriebestufe axial gegen einen Federenergiespeicher verfahren. Hierbei wird der Federenergiespeicher belastet. Nach dem Erreichen der vorgegebenen Greifkraft wird der Teil des Getriebes zwischen dem Antriebsmotor und der Schraubgetriebestufe blockiert. Dies erfolgt mittels einer sich am Gehäuse der Greifvorrichtung abstützenden lösbaren Feststellbremse, die eine der Getriebewellen kraftschlüssig arretiert. Nach dem Schließen der Feststellbremse kann der Antriebsmotor abgeschaltet werden.

Um ein mittels der Greifvorrichtung aufgenommenes Greifgut abzusetzen, wird die Feststellbremse gelüftet und der Antriebsmotor in der Gegenrichtung angetrieben.

Bei einer greifgutbedingten Verringerung der Greifkraft kann die Greifvorrichtung nachgestellt werden. Hierbei werden zunächst die Greifelementträger unter Entlastung des Federenergiespeichers in der Greifrichtung verfahren. Diese Bewegung wird mittels eines Weg- oder Winkelmesssystems detektiert, woraufhin der Antriebsmotor wieder eingeschaltet und die Feststellbremse gelüftet wird. Der Antriebsmotor wird nun solange betrieben, bis die vorgesehene Greifkraft wieder erreicht wird.

Weitere Einzelheiten der Erfindung ergeben sich aus den Unteransprüchen und der nachfolgenden Beschreibung schematisch dargestellter Ausführungsformen.
- Figur 1:: Greifvorrichtung mit Werkstück;
- Figur 2:: Isometrische Unteransicht der Greifvorrichtung der Figur 1 ohne Greifelemente;
- Figur 3:: Längsschnitt der Greifvorrichtung;
- Figur 4:: Querschnitt der Greifvorrichtung;
- Figur 5:: Greifvorrichtung bei abgenommenem Gehäuse;
- Figur 6:: Unteransicht der Figur 5;
- Figur 7:: Längsschnitt der Greifvorrichtung entlang der Schneckenwelle;
- Figur 8:: Schnecke und belasteter Federenergiespeicher bei Soll-Greifkraft beim Außengreifen;
- Figur 9:: Schnecke und belasteter Federenergiespeicher bei Soll-Greifkraft beim Innengreifen;
- Figur 10:: Greifvorrichtung mit Feststellbremse an der Schneckenwelle.

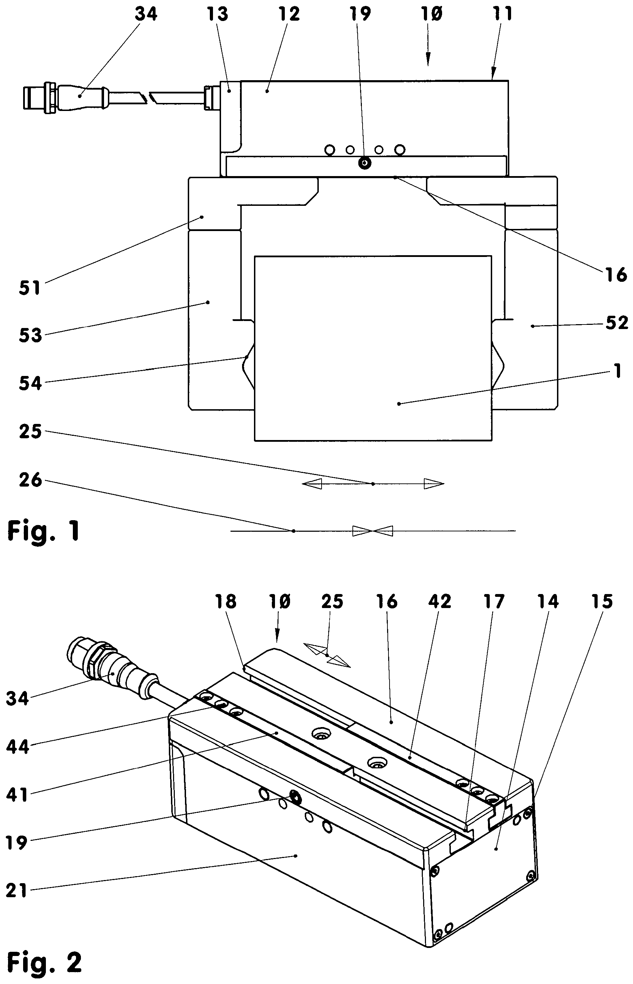

Die Figur 1 zeigt eine Greifvorrichtung (10) in der Bauart einer Parallelgreifvorrichtung. In dieser Greifvorrichtung (10) sind beispielsweise zwei Greifelemente (51, 52) mittels Greifelementträgern (41, 42), vgl. Figur 2, relativ zueinander verfahrbar. Im Ausführungsbeispiel sind beide Greifelementträger (41, 42) als im Gehäuse (11) verfahrbar gelagerte Greiferschlitten (41, 42) ausgebildet. Es ist aber auch denkbar, einen Greifelementträger (41; 42) starr anzuordnen. Die Greifvorrichtung (10) kann auch mehr als drei relativ zueinander verfahrbare Greifelementträger (41, 42) aufweisen. Zumindest jedem Greiferschlitten (41; 42) ist ein Greifelement (51; 52) zugeordnet.

Anstatt als Parallelgreifvorrichtung kann die Greifvorrichtung (10) auch als Winkelgreifvorrichtung ausgebildet sein. In diesem Fall sind die Greifelemente z.B. schwenkbar im Gehäuse (11) gelagert. Die einzelnen Greiferschlitten (41; 42) haben dann beispielsweise jeweils einen Mitnahmezapfen, der versetzt zur Schwenkachse eines Greifelements in dieses eingreift. Auch eine Ausbildung der Greifvorrichtung (10) als Nadelgreifer, Parallelogrammgreifer, etc. ist denkbar.

Die Greifvorrichtung (10) hat einen Medienanschluss (34), z.B. einem Elektroanschluss. Über diesen Medienanschluss (34) erfolgt im Ausführungsbeispiel die Energieversorgung der Greifvorrichtung (10) sowie die Ansteuerung und die Signalübertragung von einer übergeordneten Steuerungsvorrichtung zur Greifvorrichtung (10) und zurück. Die Ansteuerung und/oder die Signalübertragung zwischen der Greifvorrichtung (10) und der übergeordneten Steuerung können auch drahtlos, beispielsweise mittels Funkübertragung, erfolgen. Bei einer pneumatisch oder hydraulisch betätigten Greifvorrichtung (10) kann das pneumatische oder hydraulische Medium über diesen Medienanschluss (34) oder einen separaten Medienanschluss gefördert werden.

Das einzelnen Greifelement (51; 52) ist im Ausführungsbeispiel als L-förmige Greifbacke (51; 52) ausgebildet. Es hat einen Greifarm (53) und eine Greiffläche (54). Die Greiffläche (54) ist in der dargestellten Außengreifvorrichtung zur vertikalen Mittenquerebene der Greifvorrichtung (10) orientiert. Im Ausführungsbeispiel ist jede der Greifflächen (54) U-förmig ausgebildet. Die beiden Greifarme (53) der dargestellten Greifvorrichtung (10) sind parallel zueinander ausgerichtet. Bei einer Ausbildung der Greifvorrichtung (10) als Innengreifvorrichtung ist die jeweilige Greiffläche (54) von der vertikalen Mittenquerebene abgewandt orientiert.

In der Darstellung der Figur 1 liegen die beiden Greifelemente (51, 52) mit ihren Greifflächen (54) von außen an einem Greifgut (1), z.B. einem Stückgut, an. Beispielsweise halten beide Greifelemente (51, 52) das Greifgut (1) mit einer vorgegebenen greifgutspezifischen Anpresskraft. Diese greifgutspezifische Anpresskraft ist z.B. mindestens so groß gewählt, dass auch bei einer glatten Oberfläche des Greifguts (1) und den bei der Handhabung erfolgenden dynamischen Belastungen das Greifgut (1) sicher gehalten wird. Die maximale greifgutspezifische Anpresskraft ergibt sich beispielsweise aus der zulässigen Verformung des Greifguts (1) bei der Handhabung.

Beim Einsatz kann die Greifvorrichtung (10) beispielsweise an einem Arm eines Industrieroboters angeordnet sein. Das einzelne Greifgut (1) kann dann mittels der Greifvorrichtung (10) z.B. aus einem Magazin entnommen werden und zu einer Bearbeitungsstation gefördert werden. Dort werden die Greifelemente (51, 52) beim Absetzen des Greifguts (1) z.B. wieder auseinandergefahren.

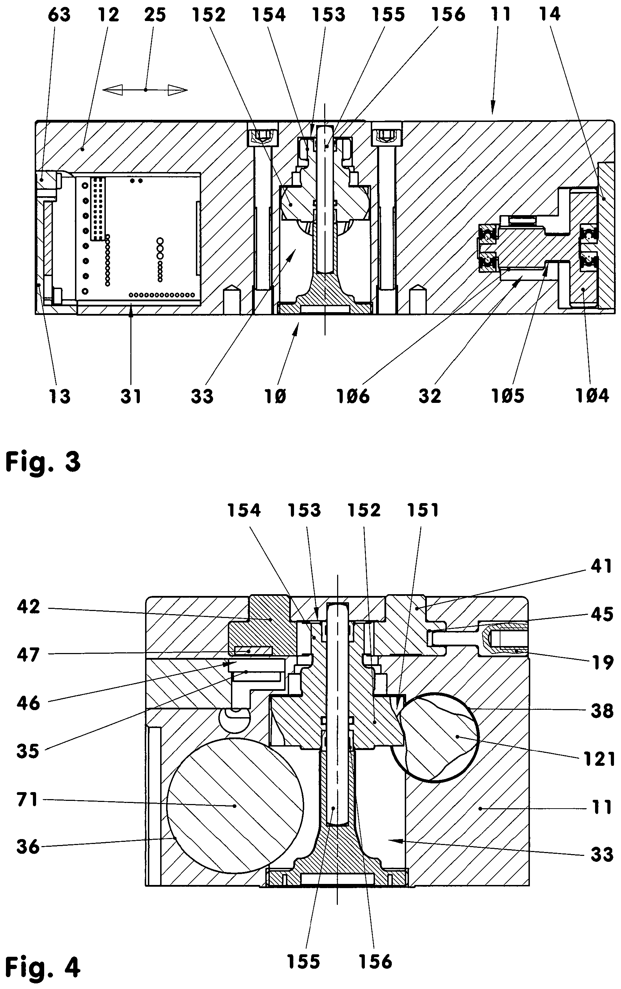

In der Figur 2 ist die Greifvorrichtung (10) ohne die Greifelemente (51, 52) dargestellt. Die Figur 3 zeigt einen Längsschnitt der Greifvorrichtung (10). Die Schnittebene der Darstellung der Figur 3 ist die vertikale Mittenlängsebene der Greifvorrichtung (10). In der Figur 4 ist ein Querschnitt der Greifvorrichtung (10) dargestellt, wobei die Schnittebene die vertikale Mittenquerebene ist.

Das Gehäuse (11) der Greifvorrichtung (10) ist beispielsweise quaderförmig ausgebildet. Es hat z.B. eine Länge von 140 Millimeter, eine Breite von 62 Millimeter und eine Höhe von 47 Millimeter. Das Gehäuse (11) hat im Ausführungsbeispiel einen zentralen Gehäusegrundkörper (12) und jeweils einen stirnseitigen Gehäusedeckel (13, 14). Der in den Darstellungen der Figuren 1 und 3 linksseitige Gehäusedeckel (13) begrenzt einen im Gehäuse (11) angeordneten Elektronikaufnahmeraum (31). Der rechtsseitige Gehäusedeckel (14), vgl. die Figuren 2 und 3, begrenzt einen Getriebeaufnahmeraum (32). Die beiden Gehäusedeckel (13, 14) sind beispielsweise mittels Senkkopfschrauben (15) am Gehäusegrundkörper (12) befestigt. Im zentralen Bereich des Gehäuses (11) befindet sich eine vertikal orientierte Synchronradaufnahme (33).

An der in der Figur 2 und 4 nach oben zeigenden Unterseite (16) des Gehäuses (11) hat dieses zwei Führungsnuten (17, 18) Die beiden Führungsnuten (17, 18) sind parallel zueinander in der Längsrichtung (25) der Greifvorrichtung (10) orientiert. Sie liegen symmetrisch zur vertikalen Mittenlängsebene der Greifvorrichtung (10). Ihr Mittenabstand beträgt z.B. 35 % der Breite der Greifvorrichtung (10). Beide Führungsnuten (17, 18) haben im Ausführungsbeispiel einen identischen, T-förmigen Querschnitt. Im zentralen Bereich des Gehäuses (11) schneiden die Führungsnuten (17, 18) die Synchronradaufnahme (33).

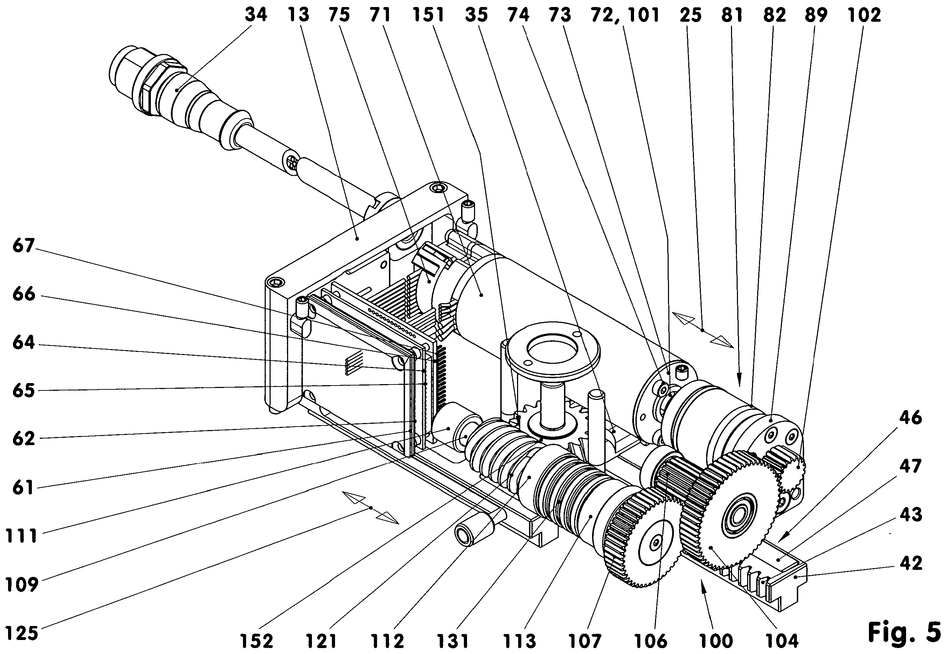

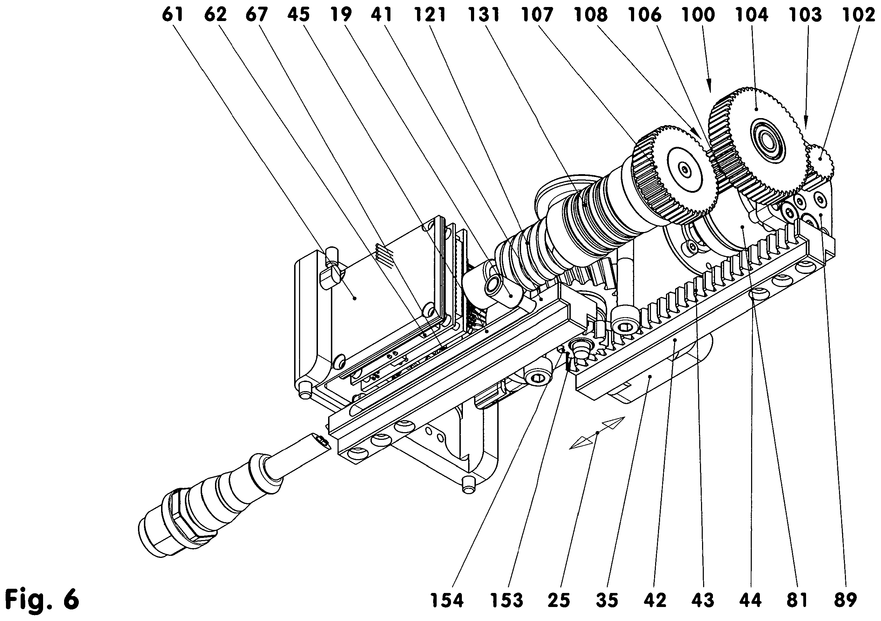

In den Führungsnuten (17, 18) sind die Greiferschlitten (41, 42) geführt. Die Greiferschlitten (41, 42) sind als Zahnstangen mit jeweils einer Verzahnung (43) ausgebildet, vgl. die Figuren 5 und 6. Im montierten Zustand ist die Verzahnung (43) jeweils zur vertikalen Mittenlängsebene hin orientiert. An der vom Gehäuse (11) weg weisenden Oberfläche hat der einzelne Greiferschlitten (41; 42) Befestigungsbohrungen (44). An den Befestigungsbohrungen (44) jeweils eines Greiferschlittens (41; 42) wird jeweils ein Greifelement (51; 52) befestigt. Als Hubbegrenzung des einzelnen Greiferschlittens (41; 42) dient beispielsweise jeweils eine im Gehäuse (11) eingeschraubte, als Senkkopfschraube ausgebildete Anschlagschraube (19) die in einer Längsnut (45) des Greiferschlittens (41; 42) geführt ist.

An einem zweiten Greiferschlitten (42) und am Gehäuse (11) ist im Ausführungsbeispiel ein Wegmesssystem (46) angeordnet. Dieses umfasst beispielsweise ein am Greiferschlitten (42) angeordnetes codiertes Band (47) oder einen codierten Stab und eine am Gehäuse (11) angeordnete Sensoreinheit (35). Im Ausführungsbeispiel ist am Greiferschlitten (42) ein zwei- oder mehrspurig codiertes magnetisches Band (47) befestigt. Dieses hat z.B. eine auf einem Grundträger aufgebrachte Ferritschicht. Die Codierung ist beispielsweise als Gray-Code ausgebildet. Die Sensoreinheit (35) hat einen konstanten Abstand zum codierten Band (47). Sie hat beispielsweise mehrere Hallsensoren und mindestens eine Widerstandsmessbrücke zum Abtasten und Auswerten der Codierung des codierten Bandes (47). Anstatt dieses absoluten Wegmesssystems (46) kann beispielsweise auch ein relatives Wegmesssystem eingesetzt werden. Das Wegmesssystem (46) kann auch als optisches Wegmesssystem ausgebildet sein.

Im Elektronikaufnahmeraum (31) des Gehäuses (11) befinden sich beispielsweise mehrere bestückte Platinen (61, 64, 66). Auf einer ersten Platine (61) ist beispielsweise ein Rechner- und Speichermodul (62) angeordnet. Hiermit werden z.B. aus einem hier gespeicherten Greiferablaufprogramm die Ansteuerungswerte für den Greiferantrieb ermittelt. Während des Programmablaufs erfolgt dies beispielsweise abhängig vom Istzustand der Greifelemente (51, 52). Das Ablaufprogramm startet beispielsweise nach dem Erhalt eines Startsignals von einer übergeordneten Steuerung. An der Platine (61) befinden sich beispielsweise auch eine Datenschnittstelle sowie von außen sichtbare Leuchtdioden (63) zur Anzeige des Betriebszustands der Greifvorrichtung (10).

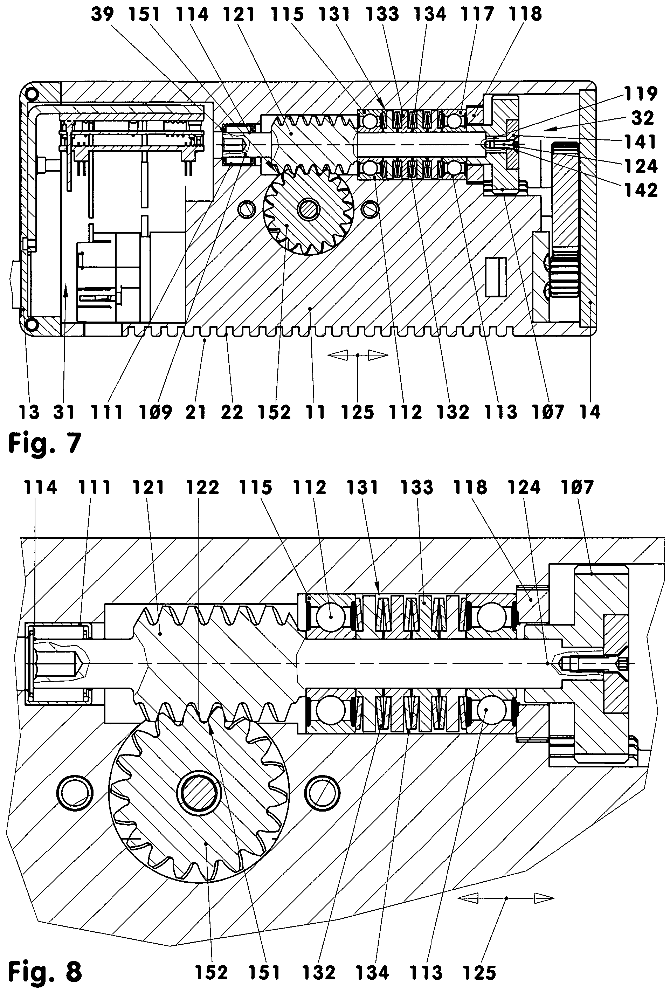

Auf einer zweiten Platine (64) ist der Servoregler (65) untergebracht. Er besteht u. a. aus der Servoregler-CPU und weiteren Bausteinen, die die Motorsignale für eine Kaskadenreglersoftware aufbereiten. Eine dritte Platine (66) trägt die Leistungsendstufe, deren Ansteuerungselektronik auf der zweiten Platine (64) aufgebaut ist. Auf dieser Platine (66) ist beispielsweise eine Motorstromüberwachung (67) angeordnet. An der Außenseite (21) des Gehäuses (11) angeordnete Kühlrippen (22), vgl. Figur 7, dienen zur Kühlung der elektronischen Bauteile der Greifvorrichtung (10).

Im Elektronikaufnahmeraum (31) sitzt in einer z.B. zylinderförmigen Ausnehmung (36) ein Antriebsmotor (71) der Greifvorrichtung (10). Die Motorwelle (72) des Antriebsmotors (71) ragt durch einen bodenseitigen Durchbruch der Ausnehmung (36) in den Getriebeaufnahmeraum (32). Hier ist das Motorschild (73) am Gehäuse (11) mittels z.B. drei Befestigungsschrauben (74) befestigt. Die Motorwelle (72) ist eine erste Getriebewelle (101) eines mehrstufigen Getriebes (100) zum Antrieb der Greifelementträger (41, 42).

Der Antriebsmotor (71) ist im Ausführungsbeispiel ein bürstenloser Gleichstrom-Servomotor mit einem Nenn-Drehmoment von 59 Millinewtonmeter und einer Nennleistung von 133 Watt. Die Nennspannung beträgt beispielsweise 24 Volt. Der Antriebsmotor (71) hat z.B. eine Nenndrehzahl von 20450 1/min. Der Durchmesser der Motorwelle (72) beträgt beispielsweise 4 Millimeter. Der Antriebsmotor (71) hat ein zweites Wellenende, auf dem ein Drehgeber (75), z.B. in der Bauform eines Resolvers, sitzt. Letzterer verfügt z. B. über einen diametral magnetisierten zweipoligen Gebermagneten, der auf der Motorwelle (72) befestigt ist. In axialer Richtung hinter dem Gebermagnet ist ein Winkelsensor zur Erfassung der Motorwellenposition angeordnet. Der Winkelsensor umfasst eine Elektronik mit mehreren Hallsensoren, mit mindestens einem Interpolator und mit mehreren Treiberstufen. Das von den Hallsensoren wahrgenommene winkelabhängige analoge Magnetfeldsignal wird verstärkt und interpoliert, so dass eine absolute Winkelinformation entsteht. Auch ein anderer Aufbau des Drehgebers (75) ist denkbar.

Auf der Motorwelle (72) sitzt im Getriebeaufnahmeraum (32) eine Bremseinheit (81). Diese ist im Gehäuse (11) z.B. mittels einer Verdrehsicherung (89), z.B. eines Sicherungsflansches (89), gesichert. Im Ausführungsbeispiel ist der Sicherungsflansch (89) am Gehäuse (11) befestigt. Die Bremseinheit (81) kann auch am zweiten Wellenende der Motorwelle (72) angeordnet sein.

Das Bremsgehäuse (82) der Bremseinheit (81) sitzt wälzgelagert auf der Motorwelle (72). Im Bremsgehäuse (82) sind ein Permanentmagnet und ein Elektromagnet angeordnet. Letzterer ist mittels elektrischer Leitungen beispielsweise von der dritten Platine (66) aus ansteuerbar. Auf der Motorwelle (72) sitzt eine Bremsscheibe, die zumindest einen magnetisierbaren, in Richtung des Permanentmagneten orientierten ferromagnetischen Belag aufweist. Ferromagnetische Werkstoffe sind beispielsweise Eisen, Kobalt, Nickel und einige Legierungen. Weiterhin sind zwischen dem Elektromagneten und der Bremsscheibe Federelemente in der Bauform von Lüftfedern angeordnet. Bei unbestromtem Elektromagnet zieht der Permanentmagnet die Bremsscheibe an und blockiert damit die Motorwelle (72). Um die Bremseinheit (81) zu lüften, wird der Elektromagnet bestromt. Das magnetische Feld des Elektromagneten neutralisiert das magnetische Feld des Permanentmagneten, sodass die Lüftfedern den Abstand zwischen dem Permanentmagneten und der Bremsscheibe vergrößern. Die Motorwelle (72) ist jetzt rotierbar. Beim Abschalten des Elektromagneten wird die Getriebewelle wieder blockiert. Die Bremseinheit (81) bildet damit eine Feststellbremse (81) der Greifvorrichtung (10).

Es ist auch denkbar, dass der gehäusefeste Teil der Feststellbremse (81) einen Ring aus einem ferromagnetischen Werkstoff aufweist. Der getriebewellenseitige Teil der Feststellbremse (81) trägt dann den Permanentmagneten. Auch in diesem Fall ist die Kraft der sich entspannenden Lüftfedern der Adhäsionskraft des Permanentmagneten entgegengerichtet.

Zwischen dem Antriebsmotor (71) und der im Getriebeaufnahmeraum (32) angeordneten Bremseinheit (81) kann eine z.B. trennbare Kupplung angeordnet sein. Damit können beispielsweise bei einem Not-Aus bei gleichzeitiger Abschaltung der Bremslüftung die Bewegungen der Greifelementträger (41, 42) unmittelbar gestoppt werden.

In der Verlängerung der ersten Getriebewelle (101) sitzt ein mitdrehendes Antriebsritzel (102). Dies ist beispielsweise ein geradverzahntes Stirnrad mit 17 Zähnen und einem Verzahnungsmodul von 0,5 mm. Die Verzahnung der ersten Getriebestufe (103) kann auch schrägverzahnt ausgebildet sein. Das Gegenrad (104) der ersten Getriebestufe (103) sitzt auf einer im Gehäuse (11) gelagerten Zwischenwelle (105). Die Zwischenwelle (105) bildet im Ausführungsbeispiel eine zweite Getriebewelle (105). Im Ausführungsbeispiel hat das Gegenrad (104) 54 Zähne. Das Antriebsritzel (102) hat die gleiche Verzahnungsbreite wie das Gegenrad (104). Auf der Zwischenwelle (105) sitzt weiterhin ein Zwischenritzel (106) mit 19 Zähnen, das mit einem auf einer Schneckenwelle (109) angeordneten Abtriebsrad (107) kämmt. Die Schneckenwelle (109) bildet eine dritte Getriebewelle (109) des Getriebes (100). Der Modul der Verzahnung der zweiten Getriebestufe (108) stimmt beispielsweise mit dem Verzahnungsmodul der ersten Getriebestufe (103) überein. Das Zwischenritzel (106) ist ein geradverzahntes Stirnrad. Seine Verzahnungsbreite beträgt im Ausführungsbeispiel das 1,8-fache der Verzahnungsbreite des Abtriebsrads (107). Im Ausführungsbeispiel hat das Abtriebsrad (107) 46 Zähne. Gegebenenfalls kann das Getriebe (100) auch weitere Getriebestufen aufweisen. So kann beispielsweise ein zusätzliches Planetengetriebe dem Antriebsmotor (71) nachgeschaltet sein.

Die Länge der Schneckenwelle (109) entspricht im Ausführungsbeispiel der Hälfte der Länge der Greifvorrichtung (10). Die Schneckenwelle (109) ist mittels dreier Wälzlager (111 - 113) im Gehäuse (11) gelagert. Sämtliche Wälzlager (111 - 113) sind als Loslager ausgebildet. Hierbei sitzt beim ersten Wälzlager (111) der Innenring (114) in axialer Richtung (125) verschiebbar auf der Schneckenwelle (109). Dieses erste Wälzlager (111) ist als Rollenlager ausgebildet. In der Darstellung der Figur 7 liegt es am Boden (39) der Schneckenwellenausnehmung (38) des Getriebeaufnahmeraums (32) an. Das zweite Wälzlager (112) und das dritte Wälzlager (113) sind als Rillenkugellage ausgebildet. Bei diesen ist jeweils der Außenring (115; 117) axial verschiebbar im Gehäuse (11) gelagert.

Zwischen dem ersten Wälzlager (111) und dem zweiten Wälzlager (112) ist die Schneckenwelle (109) als Schnecke (121) ausgebildet. Es ist auch denkbar, die Schnecke (121) auf die Schneckenwelle (109) aufzusetzen. Die Schnecke (121) ist dann z.B. sowohl in axialer Richtung (125) als auch in Umfangsrichtung relativ zur Schneckenwelle (109) gesichert. Die Schnecke (121) kann jedoch auch - bei einer in axialer Richtung (125) festliegenden Schneckenwelle (109) - axial verschiebbar auf der Schneckenwelle (109) angeordnet sein. Die axiale Richtung (125) ist im Ausführungsbeispiel in der Längsrichtung (25) orientiert.

Die Schnecke (121) ist eine zylindrische Schnecke. Im Ausführungsbeispiel ist sie eingängig ausgebildet und hat eine linksgängige Steigung. Sie kann z.B. mit gradlinigem Flankenprofil im Axialschnitt (ZA-Schnecke), mit gradlinigem Flankenprofil im Normalschnitt (ZN-Schnecke), mit Evolventenflanken im Stirnschnitt (ZI-Schnecke), mit balliger Flankenform im Axialschnitt (ZK-Schnecke) oder mit konkaver Flankenform im Axialschnitt (ZC-Schnecke) hergestellt sein.

Die Schnecke (121) hat eine konstante Steigung. Der Steigungswinkel der Schnecke (121) ist der von der Flanke (122; 123) und einer Normalenebene zur Schneckenrotationsachse (124) eingeschlossene Winkel. Dieser Steigungswinkel beträgt im Ausführungsbeispiel 13 Grad. Der Steigungswinkel kann im Bereich zwischen 8 Grad und 20 Grad liegen. Der Axialmodul der Schnecke (121) beträgt beispielsweise 1 Millimeter. Der Axial-Eingriffswinkel der Verzahnung der Schnecke (121) beträgt z.B. 20 Grad. Der Axial-Eingriffswinkel kann beispielsweise zwischen 12 Grad und 25 Grad liegen.

Die Schnecke (121) mitsamt der Schneckenwelle (109) ist im Ausführungsbeispiel aus einem thermoplastischen Werkstoff, z.B. Polyoxymethylen (POM), hergestellt. Der Zug-Elastizitätsmodul dieses Werkstoffs beträgt bis zu 3200 Newton pro Quadratmillimeter. Dieser Werkstoff hat eine Zugfestigkeit von 65 Newton pro Quadratmillimeter und eine Biegefestigkeit von 91 Newton pro Quadratmillimeter. Die genannten Festigkeitswerte können mittels Glas- oder Kohlefasern erhöht sein.

Der Werkstoff kann im Spritzgussverfahren, im Extrusionsverfahren, mittels thermischen Pressens, etc. verarbeitet werden. Auch eine nachgelagerte spanende Bearbeitung ist ohne wesentliche Änderung der genannten physikalischen Eigenschaften möglich. Auch der Einsatz anderer Thermoplaste, wie z.B. Polyetherimid (PEI), Polyaryletherketone (PAEK), Polyetheretherketon (PEEK), Polyetherketonketon (PEKK), Polyphenylensulfid (PPS), etc. ist denkbar.

Die Schneckenwelle (109) und/oder die Schnecke (121) können auch aus einem Stahlwerkstoff, der z.B. mittels Gasnitrierten gehärtet ist, bestehen. Der Werkstoff kann auch gehärtetes Aluminium sein. Die Schnecke (121) und/oder die Schneckenwelle (109) sind zumindest in diesen Fällen mittels Dreh- oder Fräsbearbeitung hergestellt.

Auf einem, z.B. an die Schnecke (121) angrenzenden zylindrischen Abschnitt der Schneckenwelle (109) sitzen das zweite Wälzlager (112) und das dritte Wälzlager (113). Der Außenring (117) des dritten Wälzlagers (113) liegt mit seiner dem zweiten Wälzlager (112) abgewandten Seite an einem im Gehäuse (11) befestigten Abstützflansch (118) an.

Zwischen dem zweiten Wälzlager (112) und dem dritten Wälzlager (113) ist im Ausführungsbeispiel ein Federenergiespeicher (131) angeordnet. Der in der Figur 7 dargestellte Federenergiespeicher (131) hat acht Tellerfedern (132), von denen die Hälfte in Richtung der Schnecke (121) und die andere Hälfte in die entgegengesetzte Richtung orientiert ist. Jeweils zwei Tellerfedern (132) sitzen auf je einer Führungshülse (133). Die einzelnen Führungshülsen (133) umgreifen die Schneckenwelle (109) und sind in axialer Richtung (125) voneinander beabstandet. Der Federenergiespeicher (131) kann auch als Tellerfederpaket mit einander anliegenden Tellerfedern (132), als Schraubendruckfeder, etc. ausgebildet sein. Es ist auch denkbar, mindestens einen Federenergiespeicher (131) mit einer Schraubenzugfeder einzusetzen. Diese ist dann beispielsweise zwischen dem ersten Wälzlager (111) und der Schnecke (121) angeordnet.

Das dem ersten Wälzlager (111) abgewandte Wellenende (119) der Schneckenwelle (109) ist polygonförmig ausgebildet. Auf diesem Wellenende (119) sitzt das Abtriebsrad (107). Das Abtriebsrad (107) ist in axialer Richtung (125) mittels einer Andrückscheibe (141) gesichert, die z.B. mittels einer Innensechskantschraube (142) zentral in der Schneckenwelle (109) befestigt ist.

Die Schnecke (121) bildet zusammen mit einem Schneckenrad (152) eine Schraubgetriebestufe (151) des Getriebes (100). Die Schneckenrotationsachse (124) der Schnecke (121) kreuzt sich mit der Achse des Schneckenrades (152). Die beiden Achsen haben keinen Schnittpunkt. Das Schneckenrad (152) ist im Ausführungsbeispiel als schrägverzahntes Stirnrad ausgebildet. Dieses wird als unechtes Schneckenrad (152) bezeichnet. Es hat 18 Zähne. Der Steigungswinkel der Verzahnung beträgt beispielsweise 17 Grad. Aufgrund der Geometrie der Schnecke (121) und des Schneckenrades (152) besteht zwischen den Wälzpartnern der Schraubgetriebestufe (151) Punktberührung. Das Schneckenrad (152) kann auch als Globoidrad ausgebildet sein. Die Schraubgetriebestufe (151) ist nicht selbsthemmend ausgebildet.

Das Schneckenrad (152) und ein mit diesem verbundenes Synchronrad (154) bilden eine Synchronradeinheit (153). Diese ist in der Synchronradaufnahme (33) des Gehäuses (11) auf einer am Gehäuse (11) befestigten Synchronradachse (155) mittels zweier Wälzlager (156) drehbar gelagert. Diese beiden Wälzlager (156) sind im Ausführungsbeispiel als Rollenlager ausgebildet. Das Synchronrad (154) ist ein geradverzahntes Stirnrad. Im Ausführungsbeispiel hat es zehn Zähne und einen Modul von einem Millimeter. Das Synchronrad (154) kämmt mit den beiden Greifelementträgern (41, 42).

Zusätzlich oder alternativ zum oben beschriebenen Wegmesssystem (46) kann ein Wegmesssystem an der Schnecke (121) und am Gehäuse (11) angeordnet sein. Auch ist es denkbar, ein Winkelmesssystem an der Synchronradeinheit (153) und am Gehäuse (11) anzuordnen.

Zum Betrieb der beispielsweise an einem Industrieroboter angeordneten Greifvorrichtung (10) wird ein greifgutspezifisches Greiferablaufprogramm gestartet. In diesem Programm ist beispielsweise zunächst hinterlegt, ob es sich bei der Greifaufgabe um eine Außengreifaufgabe oder um eine Innengreifaufgabe handelt. Weiterhin ist die Lage der Greifelementträger (41, 42) vor dem Greifen relativ zueinander oder relativ zur vertikalen Mittenquerebene der Greifvorrichtung (10) hinterlegt.

Nach der Positionierung des Arms des Industrieroboters steht die Greifvorrichtung (10) z.B. oberhalb des aufzunehmenden Greifguts (1). Die Greifvorrichtung (10) wird mittels des Industrieroboters abgesenkt, bis die Greifelemente (51, 52) z.B. bei einer Außengreifaufgabe auf der Höhe der Stirnflächen des Greifguts (1) stehen. Die Feststellbremse (81) ist gelüftet. Aus den im Greiferablaufprogramm hinterlegten Daten ergibt sich das Profil der Hubgeschwindigkeit über der Zeit bei der Bewegung der Greifelementträger (41, 42) relativ zueinander. Die Rotation der Motorwelle (72) des Antriebsmotors (71) wird mittels der Stirnradgetriebestufen (103, 108) auf die Schraubgetriebestufe (151) übertragen. Das Schneckenrad (152) wird mittels der Schnecke (121) angetrieben. Das Synchronrad (154) kämmt mit den Greifelementträger (41, 42), die in zueinander entgegengesetzte Richtungen gefördert werden.

Die Greifelemente (51, 52) legen sich an das Greifgut (1) an. Hierbei steigt mit zunehmendem Anpressen der Greifelemente (51, 52) an das Greifgut (1) der Motorstrombedarf des Antriebsmotors (71). Die Schnecke (121) belastet weiter mit ihrer Greifdruckflanke (122) das Schneckenrad (152). Die jeweilige Greifdruckflanke (122) der Schnecke (121) ist diejenige Flanke, die beim Greifen des Greifguts (1) am Schneckenrad (152) abwälzt oder anliegt. In der dargestellten Außengreifvorrichtung ist dies die in der Darstellung der Figur 8 links liegende Flanke (122) der Schnecke (121). Das Wegmesssystem (46) überwacht z.B. den Hub der Greifelementträger (41, 42).

Bei fortgesetzt anliegenden Drehmoment des Antriebsmotors (71) wird die Schnecke (121) in axialer Richtung (125) gegen den Federenergiespeicher (131) verschoben. Das Tellerfederpaket (134) wird komprimiert. Das zweite Wälzlager (112) wird aus der Darstellung der Figur 7 nach rechts verschoben, wobei sich sein Außenring (115) von seiner Anlage am Gehäuse (11) löst. Bei zunehmender Belastung des Federenergiespeichers (131) steigt der Motorstrom des Antriebsmotors (71). Sobald die Motorstromüberwachung (67) einen Motorstrom ermittelt, der einen im Greiferablaufprogramm vorgegebenen Schwellenwert erreicht oder überschreitet, wird die Feststellbremse (81) geschlossen. Der Motorstrom korreliert mit der Greifkraft. Beim Schließen der Feststellbremse (81) wird im Ausführungsbeispiel die Bestromung des Elektromagneten abgeschaltet. Der Permanentmagnet zieht den ferromagnetischen Ring an. Hiermit wird das Getriebe (100) blockiert. Der Antriebsmotor (71) kann nun abgeschaltet werden.

Bei einer Ausführung des Wegmesssystems (46) oder des Winkelmesssystems als Absolutmesssystem kann z.B. in diesem Zeitpunkt eine Greifhubabfrage erfolgen. Beim Schließen der Feststellbremse (81) wird entweder mittels des Wegmesssystems (46) die Lage der Schnecke (121) oder eines Greifelementträgers (41, 42) relativ zum Gehäuse (11) oder mittels des Winkelmesssystems die Lage der Synchronradeinheit (153) relativ zum Gehäuse (11) ermittelt. Dieser Wert wird entweder als Absolutwert oder als Ausgangswert in der Greifersteuerung gespeichert. Es ist auch denkbar, den aktuellen Greifhub relativ zum Anfangswert bei geöffneten Greifelementträgern (41, 42) zu ermitteln.

Die Figur 8 zeigt die axial unter Belastung des Federenergiespeichers (131) verschobene Schnecke (121) in der Greifvorrichtung (10) des Ausführungsbeispiels. Das zweite Wälzlager (112) ist mittels der Schneckenwelle (109) in Richtung des dritten Wälzlagers (113) verschoben. Die Führungshülsen (133) liegen beispielsweise aneinander an.

Falls das Greifgut (1) sich unter der Einwirkung der Anpresskraft der Greifelemente (51, 52) elastisch oder plastisch verformt, wird der auf die Greifbacken (51, 52) wirkende Anpresswiderstand verringert. Der Federenergiespeicher (131) wird entlastet und verschiebt die Schnecke (121) so, dass die Belastung ihrer Greifdruckflanke (122; 123) wieder zunimmt. Die Schnecke (121) wälzt am Schneckenrad (152) ab, das um die Synchronradachse (155) gedreht wird. Das mit dem Schneckenrad (152) verbundene Synchronrad (154) verschiebt die beiden Greifelementträger (41, 42) in die Schließrichtung (26) der Greifvorrichtung (10). Hierbei wird z.B. mittels des Wegmesssystems (46) beispielsweise eine Veränderung er Lage des Greifelementträgers (41; 42) erkannt. Mittels der z.B. greifvorrichtungseigenen Steuerung wird der Antriebsmotor (71) eingeschaltet. Außerdem wird der Elektromagnet der Feststellbremse (81) bestromt. Die Feststellbremse (81) wird gelüftet. Nun werden mittels des Antriebsmotors (71) die Greifelementträger (41, 42) weiter in die Schließrichtung (26) verfahren, bis der Motorstrom wieder den vorgegebenen Wert erreicht. Die Feststellbremse (81) wird wieder geschlossen und der Antriebsmotor (71) wird abgeschaltet.

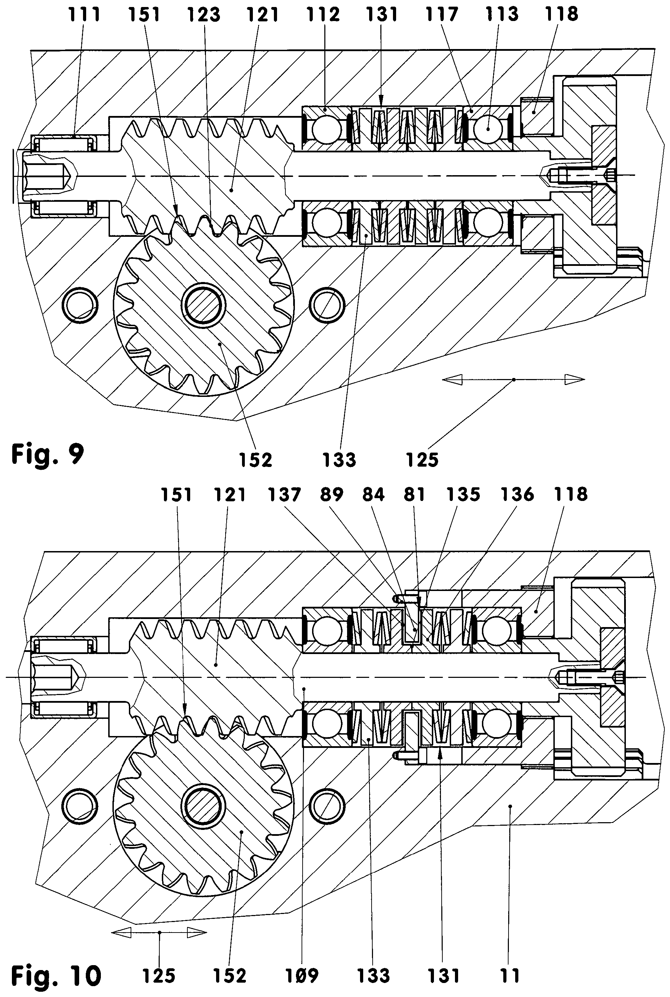

Wird die Greifvorrichtung (10) für eine Innengreifaufgabe eingesetzt, verfahren die Greifelementträger (41, 42) beim Greifen der Greifvorrichtung (10) in die der vertikalen Mittenquerebene abgewandte Richtung. Beim Schließen dieser Greifvorrichtung (10) dreht sich die Schnecke (121) in die zum Außengreifen entgegengesetzte Drehrichtung. Die Greifdruckflanke (123) der Schnecke (121) beim Innengreifen ist die in der Figur 9 linke Flanke. Die Synchronradeinheit (153) dreht sich beim Schließen der Innengreifeinheit in der Darstellung der Figur 6 im Gegenuhrzeigersinn.

Mit zunehmender Anpresskraft am Greifgut (1) wird die Schnecke (121) zusammen mit der Schneckenwelle (109) aus der in der Figur 7 dargestellten Lage relativ zum Gehäuse (11) nach links verschoben. Auch in diesem Fall wird der Abstand des zweiten Wälzlagers (112) und des dritten Wälzlagers (113) verringert.

Die Figur 9 zeigt die axial unter Belastung des Federenergiespeichers (131) verschobene Schnecke (121) bei Einsatz der in den Figuren 2 bis 7 dargestellten Greifvorrichtung (10) als Innengreifvorrichtung. Das dritte Wälzlager (113) ist in diesem Zustand beabstandet vom Abstützflansch (118).

Das Greifen eines Greifguts (1) mittels einer Innengreifvorrichtung erfolgt - bis auf die Bewegungsrichtung der Bauteile - analog zum Greifen eines Greifguts (1) mittels einer Außengreifvorrichtung. Nach dem Schließen der Feststellbremse (81) kann auch in diesem Fall der Antriebsmotor (71) abgestellt werden. Falls sich das Greifgut (1) unter der Wirkung der Anpresskraft elastisch oder plastisch verformt, wird auch in diesem Fall mittels eines erneuten Zuschaltens des Antriebsmotors (71) die Greifkraft wiederaufgebaut.

Anstatt eines kombinierten Federenergiespeichers (131) für das Innen- und Außengreifen können auch zwei Federenergiespeicher (131) eingesetzt werden. Einer erster dieser Federenergiespeicher wird dann beim Erreichen der vorgesehenen Greifkraft beim Außengreifen belastet. Der andere Federenergiespeicher, der z.B. am anderen Ende der Schnecke (121) angeordnet ist, wird in diesem Fall beim Innengreifen eines Greifguts (1) belastet. Die Federenergiespeicher (131) können in der Ausgangsstellung vorgespannt sein.

Zum Absetzen des Greifguts (1) wird sowohl beim Betrieb der Greifvorrichtung (10) als Außengreifvorrichtung als auch beim Betrieb als Innengreifvorrichtung der die Greifvorrichtung (10) tragende Arm des Industrieroboters an den entsprechenden Ort verfahren. Hier wird der Arm des Industrieroboters beispielsweise soweit abgesenkt, bis das Greifgut (1) auf einer Unterlage aufliegt. Nun wird der Antriebsmotor (71) zur Drehung in die Öffnungsrichtung bestromt und die Feststellbremse (81) gelüftet, z.B. mittels Bestromung des Elektromagneten. Beim Betrieb des Antriebsmotors (71) werden nun mittels des Getriebes (100) einschließlich der Schraubgetriebestufe (151) die Greifelementträger (41, 42) in die Öffnungsrichtung gefördert.

Die Figur 10 zeigt eine Alternative der Anordnung und des Aufbaus der Feststellbremse (81). Diese ist an der dritten Getriebewelle (109) und am Gehäuse (11) angeordnet. Beispielsweise zwischen zwei Führungshülsen (133) des Federenergiespeichers (131) ist ein Ringträger (135) angeordnet. Dieser ist im Ausführungsbeispiel zweiteilig mit zwei aneinander anstoßenden Ringträgerteilen (136) ausgebildet. Die beiden, z.B. identisch zueinander ausgebildeten Ringträgerteile (136) sind spiegelbildlich zueinander angeordnet. An den einander zugewandten Flächen der Ringträgerteile (136) ist jeweils ein umlaufender Ring (137) aus einem ferromagnetischen Werkstoff befestigt. Es ist auch denkbar, das gesamte Ringträgerteil (136) aus einem ferromagnetischen Werkstoff herzustellen.

Zwischen den beiden Ringen (137) der Ringträgerteile (136) sitzt ein im Gehäuse (11) befestigter Permanentmagnet (84). Der Permanentmagnet (84) ist ringförmig ausgebildet und umgreift die Schneckenwelle (109). In diesem Ausführungsbeispiel ist die Kraft des Federenergiespeichers (131) größer als die Anzugskraft des Permanentmagneten (84). Die in der Figur 10 dargestellte Greifvorrichtung (10) hat beispielsweise keine an der ersten Getriebewelle (101) angeordnete Bremseinheit (81). Es ist auch denkbar, den Ring (137) als gehäusefesten Teil und den Permanentmagneten als den der Getriebewelle (101; 105; 109) zugeordneten Teil der Feststellbremse (81) auszubilden.

Das Greifen eines Greifguts (1) erfolgt weitgehend, wie im Zusammenhang mit den vorhergehenden Ausführungsbeispielen beschrieben. Beim Aufbau der Anpresskraft am Greifgut wird die Schnecke (121) relativ zum Gehäuse (11) verschoben, sodass das Magnetfeld des Permanentmagneten (84) den Ring (137) und damit die Schnecke (121) in ihrer Position blockiert. Der Antriebsmotor (71) kann abgeschaltet werden.

Sollte sich das Greifgut (1) elastisch oder plastisch verformen, wird auch in diesem Ausführungsbeispiel der Federenergiespeicher (131) entlastet. Der sich entladende Federenergiespeicher (131) verschiebt die Schnecke (121), wobei der Abstand des Permanentmagneten (84) zum Ring (137) vergrößert wird. Der Federenergiespeicher (131) hat in diesem Ausführungsbeispiel zusätzlich die Funktion der Lüftfeder der Feststellbremse (81). Die vom Wegmesssystem (46) oder vom Winkelmesssystem direkt oder indirekt ermittelte Lageänderung der Greifelementträger (41, 42) führt auch in diesem Ausführungsbeispiel zum Wiedereinschalten des Antriebsmotors (71). Der Antriebsmotor (71) wird auch in diesem Fall wieder solange bestromt, bis der voreingestellte Schwellenwert der Motorstromüberwachung (67) anspricht.

Beim Öffnen der Greifvorrichtung (10) rotiert das Getriebe (100) in der entgegengesetzten Richtung. Die jeweilige Greifdruckflanke (122; 123) der Schnecke (121) löst sich von der Flanke des Schneckenrades (152). Hierbei wird auch der Abstand zwischen dem Ring (137) und dem Permanentmagneten (84) vergrößert. Die Feststellbremse (81) wird gelüftet. Die Greifvorrichtung (10) kann nun in ihre geöffnete Ausgangsstellung verfahren.

Anstatt eines elektrischen Antriebsmotors (71) kann auch ein hydraulischer oder pneumatischer Antriebsmotor (71) eingesetzt werden. Die Motorstromüberwachung (67) wird bei hydraulischen oder pneumatischen Antriebsmotoren durch eine Drucküberwachung ersetzt. In der Greifersteuerung ist dann ein Schwellenwert des Drucks hinterlegt, bei dem die Feststellbremse (81) schließt.

Auch Kombinationen der einzelnen Ausführungsbeispiele sind denkbar.

### Bezugszeichenliste:

- 1: Greifgut

- 10: Greifvorrichtung
- 11: Gehäuse
- 12: Gehäusegrundkörper
- 13: Gehäusedeckel
- 14: Gehäusedeckel
- 15: Senkkopfschrauben
- 16: Unterseite von (11)
- 17: Führungsnut
- 18: Führungsnut
- 19: Anschlagschraube

- 21: Außenseite von (11)
- 22: Kühlrippen

- 25: Längsrichtung
- 26: Schließrichtung

- 31: Elektronikaufnahmeraum
- 32: Getriebeaufnahmeraum
- 33: Synchronradaufnehme
- 34: Medienanschluss
- 35: Sensoreinheit
- 36: zylinderförmige Ausnehmung in (31)
- 38: Schneckenwellenausnehmung
- 39: Boden von (38)

- 41: Greifelementträger, Greiferschlitten
- 42: Greifelementträger, Greiferschlitten
- 43: Verzahnung
- 44: Befestigungsbohrungen
- 45: Längsnut
- 46: Wegmesssystem
- 47: codiertes band

- 51: Greifelement, Greifbacke
- 52: Greifelement, Greifbacke
- 53: Greifarm
- 54: Greiffläche

- 61: Platine, erste Platine
- 62: Rechner- und Speichermodul
- 63: Leuchtdioden
- 64: Platine, zweite Platine
- 65: Servoregler
- 66: Platine, dritte Platine
- 67: Motorstromüberwachung

- 71: Antriebsmotor
- 72: Motorwelle
- 73: Motorschild
- 74: Befestigungsschrauben
- 75: Drehgeber

- 81: Bremseinheit, Feststellbremse
- 82: Bremsgehäuse
- 84: Permanentmagnet

- 89: Verdrehsicherung, Sicherungsflansch

- 100: Getriebe
- 101: erste Getriebewelle
- 102: Antriebsritzel
- 103: erste Getriebestufe, Stirnradgetriebestufe
- 104: Gegenrad von (103)
- 105: Zwischenwelle, zweite Getriebewelle
- 106: Zwischenritzel
- 107: Abtriebsrad
- 108: zweite Getriebestufe, Stirnradgetriebestufe
- 109: Schneckenwelle, dritte Getriebewelle

- 111: Wälzlager, erstes Wälzlager
- 112: Wälzlager, zweites Wälzlager
- 113: Wälzlager, drittes Wälzlager
- 114: Innenring von (111)
- 115: Außenring von (112)
- 117: Außenring von (113)
- 118: Abstützflansch
- 119: Wellenende von (109)

- 121: Schnecke
- 122: Flanke von (121), Greifdruckflanke beim Außengreifen
- 123: Flanke von (121), Greifdruckflanke beim Innengreifen
- 124: Schneckenrotationsachse
- 125: axiale Richtung von (121)

- 131: Federenergiespeicher
- 132: Tellerfedern
- 133: Führungshülse
- 134: Tellerfederpaket
- 135: Ringträger
- 136: Ringträgerteile
- 137: Ring, umlaufend

- 141: Andrückscheibe
- 142: Innensechskantschraube

- 151: Schraubgetriebestufe
- 152: Schneckenrad
- 153: Synchronradeinheit
- 154: Synchronrad
- 155: Synchronradachse
- 156: Wälzlager

## Patentansprüche

1. Greifvorrichtung (10) mit einem, eine Motorstromüberwachung (67) oder eine Drucküberwachung aufweisenden Antriebsmotor (71) und mit einem mittels des Antriebsmotors (71) antreibbaren Getriebe (100), wobei das Getriebe (100) eine mittels mindestens einer rotierbaren Getriebewelle (101; 105; 109) getriebene Schraubgetriebestufe (151) hat, die mit mindestens einer von zumindest zwei relativ zueinander verfahrbaren Greifelementträgern (41; 42) gekuppelt ist, wobei in einem Gehäuse (11) der Greifvorrichtung (10) eine Feststellbremse (81) zum Blockieren zumindest einer der genannten Getriebewellen (101; 105; 109) angeordnet ist, wobei die Schraubgetriebestufe (151) eine gegen mindestens einen Federenergiespeicher (131) axial verschiebbare Schnecke (121) aufweist, sodass bei einer Zunahme des Flankendrucks an der jeweiligen Greifdruckflanke (122; 123) der Schnecke (121) die Belastung eines dieser Federenergiespeicher (131) zunimmt.

2. Greifvorrichtung (10) nach Anspruch 1, **dadurch gekennzeichnet, dass** das Getriebe (100) mindestens eine Stirnradgetriebestufe (103; 108) aufweist.

3. Greifvorrichtung (10) nach Anspruch 1, **dadurch gekennzeichnet, dass** die Schneckenwelle (109) der Schnecke (121) ein geradverzahntes Abtriebsrad (107) des Getriebes (100) trägt, das mit einem weiteren geradverzahnten Zwischenritzel (106) des Getriebes (100) kämmt.

4. Greifvorrichtung (10) nach Anspruch 1, **dadurch gekennzeichnet, dass** die Schneckenwelle (109) der Schnecke (121) als Federenergiespeicher (131) ein Tellerfederpaket (134) trägt.

5. Greifvorrichtung (10) nach Anspruch 1, **dadurch gekennzeichnet, dass** die Schnecke (121) aus einem thermoplastischen Werkstoff besteht.

6. Greifvorrichtung (10) nach Anspruch 1, **dadurch gekennzeichnet,**
- **dass** sie entweder ein Wegmesssystem (46) aufweist, das einerseits am Gehäuse (11) und andererseits an der Schnecke (121) oder an einem Greifelementträger (41; 42) angeordnet ist oder
- **dass** sie ein Winkelmesssystem aufweist, das am Gehäuse (11) und an einer ein mit der Schnecke (121) kämmendes Schneckenrad (152) aufweisenden Synchronradeinheit (153) angeordnet ist.

7. Greifvorrichtung (10) nach Anspruch 6, **dadurch gekennzeichnet, dass** das Wegmesssystem (46) ein am Greifelementträger (41; 42) angeordnetes magnetisch codiertes Band aufweist.

8. Greifvorrichtung nach Anspruch 1, **dadurch gekennzeichnet, dass** die Feststellbremse (81) einen gehäusefesten Teil und einen einer Getriebewelle (101; 105; 109) zugeordneten Teil sowie ein beide Teile belastendes Federelement aufweist, wobei entweder der gehäusefeste Teil oder der getriebewellenseitige Teil einen Permanentmagneten (84) und der jeweils andere Teil einen Ring (137) aus einem ferromagnetischen Werkstoff aufweist und wobei die Kraft des sich entspannenden Federelements der Adhäsionskraft des Permanentmagneten (84) entgegengerichtet ist.

9. Verfahren zum Betrieb einer Greifvorrichtung (10) nach Anspruch 1 mit mindestens jeweils einem Greifelement (51; 52) pro Greiferschlitten (41; 42) und mit einem Greifgut (1),
- wobei mittels der Greifvorrichtung (10) bei gelüfteter Feststellbremse (81) die Greifelemente (51, 52) an das Greifgut (1) angepresst werden, bis die Motorstromüberwachung (67) oder die Drucküberwachung einen vorgegebenen Wert erreicht,
- wobei der Flankendruck der Greifdruckflanke (122; 123) der Schnecke (121) ansteigt und die Schnecke (121) unter Belastung des Federenergiespeichers (131) in axialer Richtung (125) verschoben wird,
- wobei die Feststellbremse (81) geschlossen wird und
- wobei der Antriebsmotor (71) abgeschaltet wird.

10. Verfahren nach Anspruch 9,
- wobei beim Schließen der Feststellbremse (81) mittels eines Wegmesssystems (46) oder eines Winkelmesssystems die Lage der Schnecke (121), der Synchronradeinheit (153) oder mindestens eines Greifelementträgers (41, 42) relativ zum Gehäuse (11) ermittelt wird,
- wobei bei einer Verringerung des Anpresswiderstands der Greifelemente (51, 52) am Greifgut (1) der sich entlastende Federenergiespeicher (131) die Schnecke (121) in axialer Richtung (125) unter Erhöhung des Flankendrucks der Greifdruckflanke (122; 123) verschiebt,
- wobei bei einer mittels des Wegmesssystems (46) oder des Winkelmesssystems festgestellten Differenz zu den ermittelten Werten der Antriebsmotor (71) eingeschaltet und die Feststellbremse (81) gelüftet wird, bis die Motorstromüberwachung (67) oder die Drucküberwachung den vorgegebenen Wert erreicht.

## Claims

1. Gripping device (10) with a drive motor (71) having a motor current monitor (67) or a pressure monitor and with a gearbox (100) that can be driven by means of the drive motor (71), wherein the gearbox (100) has a screw gear stage (151) which is driven by means of at least one rotatable transmission shaft (101; 105; 109) and which is coupled to at least one of at least two gripping element carriers (41; 42) which are movable relative to one another, wherein a locking brake (81) is arranged in a housing (11) of the gripping device (10) for blocking at least one of the aforementioned transmission shafts (101; 105; 109), wherein the screw gear stage (151) has a worm (121) that can be axially displaced against at least one spring energy storage device (131), such that when the flank pressure on the respective gripping pressure flank (122; 123) of the worm (121) increases, the load on one of these spring energy storage devices (131) increases.

2. Gripping device (10) according to Claim 1, **characterised in that** the gearbox (100) has at least one spur gear stage (103; 108).

3. Gripping device (10) according to Claim 1, **characterised in that** the worm shaft (109) of the worm (121) carries a straight toothed output gear (107) of the gearbox (100), which meshes with another straight toothed intermediate pinion (106) of the gearbox (100).

4. Gripping device (10) according to Claim 1, **characterised in that** the worm shaft (109) of the worm (121) carries a disc spring assembly (134) as a spring energy storage device (131).

5. Gripping device (10) according to Claim 1, **characterised in that** the worm (121) is made of a thermoplastic material.

6. Gripping device (10) according to Claim 1, **characterised in that**
- it either has a position measuring system (46), which is arranged on the housing (11) on the one hand and on the worm (121) or on a gripping element carrier (41; 42) on the other hand or
- it has an angle measuring system, which is arranged on the housing (11) and on a synchronising gear unit (153) having a worm wheel (152) meshing with the worm (121).

7. Gripping device (10) according to Claim 6, **characterised in that** the position measuring system (46) has a magnetically coded strip arranged on the gripping element carrier (41; 42).

8. Gripping device according to Claim 1, **characterised in that** the locking brake (81) has a part integral with the housing and a part associated with a transmission shaft (101; 105; 109) as well as a spring element that applies force to both parts, wherein either the part integral with the housing or the part on the transmission shaft side has a permanent magnet (84) and the respective other part has a ring (137) made of a ferromagnetic material and wherein the force of the spring element as it relaxes is directed opposite to the adhesive force of the permanent magnet (84).

9. Method for operating a gripping device (10) according to Claim 1 with at least respectively one gripping element (51; 52) per gripping slide (41; 42) and with a gripped item (1),
- wherein when the locking brake (81) is released, the gripping elements (51, 52) are pressed against the gripped item (1) by means of the gripping device (10) until the motor current monitor (67) or pressure monitor reaches a predefined value,
- wherein the flank pressure of the gripping pressure flank (122; 123) of the worm (121) increases and the worm (121) is displaced in an axial direction (125) under load of the spring energy storage device (131),
- wherein the locking brake (81) is engaged and
- wherein the drive motor (71) is switched off.

10. Method according to Claim 9,
- wherein when the locking brake (81) is engaged, the position of the worm (121), the synchronising gear unit (153) or at least one gripping element carrier (41, 42) relative to the housing (11) is determined by means of a position measuring system (46) or an angle measuring system,
- wherein when the contact pressure resistance of the gripping elements (51, 52) on the gripped item (1) is reduced, the relaxing spring energy storage device (131) displaces the worm (121) in an axial direction (125) while increasing the flank pressure of the gripping pressure flank (122; 123),
- wherein if a difference to the determined values is detected by means of the position measuring system (46) or the angle measuring system, the drive motor (71) is switched on and the locking brake (81) released until the motor current monitor (67) or pressure monitor reaches the predefined value.

## Revendications

1. Dispositif de préhension (10) avec un moteur d'entraînement (71) comportant un contrôle de courant de moteur (67) ou un contrôle de pression et avec un mécanisme (100) pouvant être entraînée au moyen du moteur d'entraînement (71), sachant que le mécanisme (100) possède un niveau de mécanisme à vis (151) actionné au moyen d'au moins un arbre de transmission (101, 105, 109) pouvant tourner , qui est couplé à au moins deux supports d'éléments de préhension (41, 42) pouvant être déplacés l'un par rapport à l'autre, sachant qu'
un frein de stationnement (81) destiné à bloquer au moins un desdits arbres de transmission (101, 105, 109), est disposé dans un boîtier (11) du dispositif de préhension (10),
sachant que le niveau de mécanisme à vis (151) comporte une vis sans fin (121) axialement déplaçable par rapport à au moins un accumulateur d'énergie faisant ressort (131) de telle manière que lors d'une augmentation de la pression de flanc sur le flanc de pression de préhension respectif (122, 123) de la vis sans fin (121), la sollicitation de charge d'un de ces accumulateurs d'énergie faisant ressort (131) augmente.

2. Dispositif de préhension (10) selon la revendication 1, ***caractérisé en ce que*** le mécanisme (100) comporte au moins un niveau de mécanisme à engrenages droits (103, 108).

3. Dispositif de préhension (10) selon la revendication 1, ***caractérisé en ce que*** l'arbre à vis sans fin (109) de la vis sans fin (121) porte une roue de de sortie à denture droite (107) du mécanisme (100), qui s'engrène avec un autre pignon intermédiaire à denture droite (106) du mécanisme (100).

4. Dispositif de préhension (10) selon la revendication 1, ***caractérisé en ce que*** l'arbre à vis sans fin (109) de la vis sans fin (121) porte en tant qu'accumulateur d'énergie faisant ressort (131), un ensemble à ressort Belleville (134).

5. Dispositif de préhension (10) selon la revendication 1, ***caractérisé en ce que*** la vis sans fin (121) est composée de matière thermoplastique.

6. Dispositif de préhension (10) selon la revendication 1, ***caractérisé en ce qu'***
- il comporte soit un système de mesure de déplacement (46), qui est disposé d'une part sur le boîtier (11) et d'autre part sur la vis sans fin (121), soit est disposé sur un support d'élément de préhension (41, 42), ou
- **en ce qu'**il comporte un système de mesure d'angle, qui est disposé sur le boîtier (11) et sur une unité de roue synchronisée (153) comportant une roue de vis sans fin (152) s'engrenant avec la vis sans fin (121).

7. Dispositif de préhension (10) selon la revendication 6, ***caractérisé en ce que*** le système de mesure de déplacement (46) comporte une bande à codage magnétique disposée sur le support d'élément de préhension (41, 42).

8. Dispositif de préhension selon la revendication 1, ***caractérisé en ce que*** le frein de stationnement (81) comporte une partie solidaire au boîtier et une partie attribuée à un arbre de transmission (101, 105, 109) ainsi qu'un un élément faisant ressort sollicitant les deux parties, sachant que soit la partie solidaire au boîtier, soit la partie du côté arbre de transmission comporte un aimant permanent (84) et l'autre partie respective une bague (137) en matériau ferromagnétique et sachant que la force de l'élément faisant ressort se détendant est orientée en opposition à la force d'adhérence de l'aimant permanant (84).

9. Procédé de fonctionnement d'un dispositif de préhension (10) selon la revendication 1 avec respectivement au moins un élément de préhension (51, 52) par chariot préhenseur (41, 42) et avec un bien à saisir (1),
- sachant que les éléments de préhension (51, 52) sont pressés contre le bien à saisir (1) au moyen du dispositif de préhension (10) avec le frein de stationnement détendu (81) jusqu'à ce que le contrôle de courant du moteur (67) ou le contrôle de pression atteigne une valeur prédéfinie,
- sachant que la pression de flanc des flancs de pression de préhension (122, 123) de la vis sans fin (121) augmente et la vis sans fin (121) est déplacée en direction axiale (125) sous la sollicitation de l'accumulateur d'énergie faisant ressort (131),
- sachant que le frein de stationnement (81) est fermé, et
- sachant que le moteur d'entraînement (71) est arrêté.

10. Procédé selon la revendication 9,
- sachant que lors de la fermeture du frein de stationnement (81) au moyen d'un système de mesure de déplacement (46) ou d'un système de mesure d'angle, la position de la vis sans fin (121) de l'unité de roue synchronisée (153) ou d'au moins un support d'élément de préhension (41, 42) est déterminée par rapport au boîtier (11),
- sachant que lors d'une réduction de la résistance de pression des éléments de préhension (51, 52) des accumulateurs d'énergie faisant ressort sur le bien à saisir (1), l'accumulateur d'énergie faisant ressort se détendant (131) déplace la vis sans fin (121) en direction axiale (125) en augmentant la pression de flanc du flanc de pression de préhension (122, 123),
- sachant qu'avec une différence constatée au moyen du système de mesure de déplacement (46) ou du système de mesure d'angle par rapport aux valeurs déterminées, le moteur d'entraînement (71) est mis en marche et le frein de stationnement (81) est détendu jusqu'à ce que le contrôle de courant de moteur (67) ou le contrôle de pression atteigne la valeur prédéfinie.
